Europäisches Patentamt

(19) European Patent Office

Office européen des brevets

(11) Numéro de publication: **0 160 605**
**B1**

(12) **FASCICULE DE BREVET EUROPEEN**

(45) Date de publication du fascicule du brevet: **14.03.90**

(51) Int. Cl.⁵: **G 11 B 33/04, G 11 B 23/02**

(21) Numéro de dépôt: **85400712.7**

(22) Date de dépôt: **10.04.85**

(54) **Dispositif de rangement modulable pour disques compacts ou analogues.**

(30) Priorité: **11.04.84 FR 8405758**

(43) Date de publication de la demande:
**06.11.85 Bulletin 85/45**

(45) Mention de la délivrance du brevet:
**14.03.90 Bulletin 90/11**

(84) Etats contractants désignés:
**AT BE CH DE FR GB IT LI LU NL SE**

(56) Documents cités:
**DE-A-3 211 291**
**DE-A-3 218 118**
**FR-A-2 176 944**
**FR-A-2 317 184**
**FR-A-2 387 493**
**GB-A-2 021 072**
**US-A-2 868 606**
**US-A-3 756 383**
**US-A-3 907 116**
**US-A-4 407 411**

(73) Titulaire: **Fouassier, Jean Pierre**
**8, rue des Pervenches**
**F-92260 Fontenay aux Roses (FR)**

(72) Inventeur: **Fouassier, Jean Pierre**
**8, rue des Pervenches**
**F-92260 Fontenay aux Roses (FR)**

(74) Mandataire: **Combe, André et al**
**CABINET BEAU DE LOMENIE 55, rue**
**d'Amsterdam**
**F-75008 Paris (FR)**

Courier Press, Leamington Spa, England.

EP 0 160 605 B1

## Description

L'invention concerne un dispositif de rangement et maintien en place, avec éjection mécanique, de disques compacts, cassettes d'enregistrement magnétique et analogues, consistant en un coffret généralement cubique ouvert sur l'une de ses faces, deux pièces constituées d'une plaque latérale portant sur l'une des faces des parties saillantes déterminant entre elles des compartiments de rangement, la plaque étant sur au moins l'une des pièces incisée dans chaque compartiment pour faire apparaître une languette élastique terminée par une partie en biseau formant crochet de retenue vers l'intérieure et en deux pièces constituées d'une plaque de base comportant des pièces saillantes servant de support à des ressorts. De plus, les deux pièces constituées d'une plaque latérale peuvent être glissées dans le coffret grâce à quatre rainures prévues à cet effet dans deux faces opposées intérieures de celui-ci puis encliquetées, les deux pièces constituées d'une plaque de base sont fixées au fond du coffret de manière que chaque compartiment délimité par les parties saillantes soit en regard de deux ressorts d'éjection, et un espace est ménagé de chaque côé du coffret entre lesdites rainures et les faces adjacentes dudit coffret, pour permettre le pivotement élastique de la languette.

Un tel dispositif est décrit dans la demande de brevet EP—A—0 157 826 publiée le 16.10.85 et par conséquent comprise dans l'état de la technique selon l'article 54, paragraph 3. Ce dispositif a parfaitement remplie sa mission en ce qu'il a proposé un système de rangement vraiment modulable. Cependent, si les boîtiers de disques compacts ou de cassettes sont dans l'ensemble standardisés, il demure qu'ils sont disponibles en plusieurs épaisseurs:notamment, il existe des boîtiers simples ou des boîtiers doubles.

GB—A—2 021 072 décrit un dispositif de rangement de cassettes selon la première partie de la revendication 1.

La présente invention se propose d'améliorer le dispositif de rangement existant de façon à permettre à chaque utilisateur de transformer à volonté son coffret de rangement pour qu'il puisse contenir des boîtiers de différentes épaisseurs.

Ce but est atteint avec le dispositif de rangement selon la revendication 1.

L'invention sera mieux comprise grâce à la description suivante d'un mode particulier et non limitatif de réalisation. On se référera aux dessins annexés, sur lesquels:

la figure 1 représente une vue en perspective du dispositif complet;

la figure 2 représente en perspective les pièces 3 et 10 (figures 2(a) et 2(b)) sorties de leur coffret;

la figure 3 représente un mode préféré de création de modules;

la figure 4 est une vue perspective partielle d'une plaque plane conforme à l'invention avec arrachement partiel;

la figure 5 est une vue perspective montrant le détail d'une partie saillante amovible.

Le dispositif se compose d'un coffret 1 ouvert dont deux faces opposées présentent sur leurs faces intérieures quatre rainures 2 à proximité des parois adjacentes. Ces rainures sont destinées à recevoir deux pièces 3 dont on complètera la fixation au coffret par un système d'encliquetage non représenté.

Il est essentiel, et là réside une originalité majeure de l'invention, qu'il subsiste un espace 11 entre chaque pièce 3 et la face en regard du coffret 1, cet espace étant tel qu'il autorise le pivotement classique de la patte 5 [terminée par la partie 6 formant crochet de retenue pour le disque compact (ou cassette, etc.) rangé dans le dispositif].

Il est tout à fait préférable que chaque crochet de retenue (6) présente une partie (6') située en retrait par rapport à l'extrémité avant des parties saillantes (4), afin d'assurer un meilleur guidage de la cassette, du disque, etc... lors de la mise en place dans le coffret, évitant ainsi qui la force de rappel de la patte (5, 6) ne perturbe l'exactitude recherchée de la mise en place.

Chaque pièce 3 comporte des parties saillantes 4 espacées entre elles de façon à former des compartiments séparés adaptés aux dimensions des disques, cassettes, etc.

Chaque pièce 3 comporte des parties saillantes en regard, mais il n'est pas nécessaire que chaque pièce 3 comporte les systèmes élastiques 5, 6. Cela peut même présenter l'inconvénient d'une double manipulation.

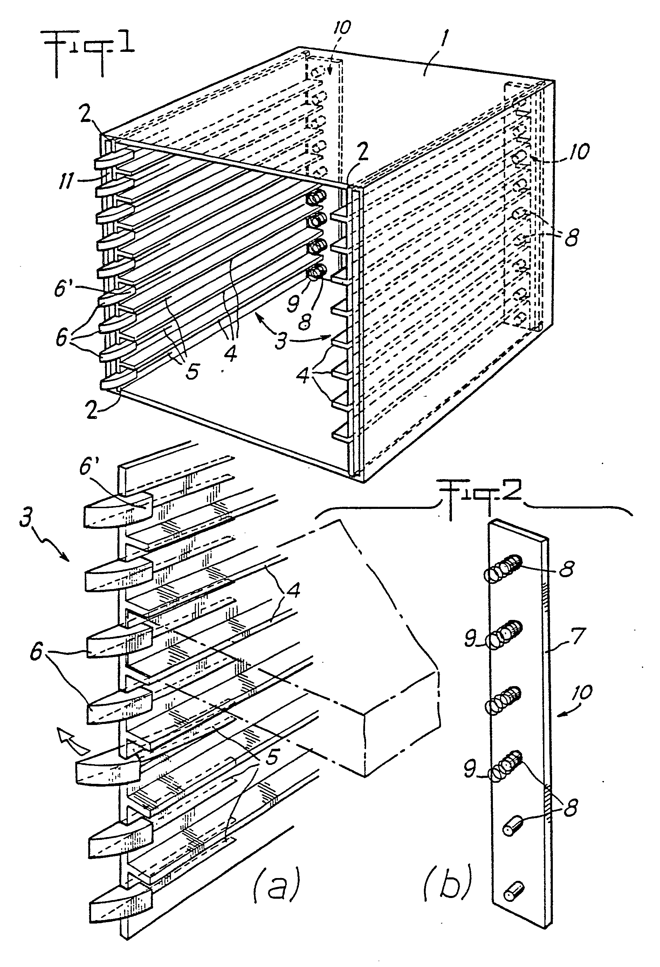

Le dispositif selon l'invention comporte encore deux pièces 10 destinées à être fixées (encliquetage, collage, etc.) au fond du coffret, comme représenté sur la figure 1.

Chaque pièce 10 est formée d'une base 7 comportant des pièces saillantes 8 destinées à servir de support à des ressorts 9 qui seront simplement "enfilés" sur ces pièces et fixés par collage ou autre.

On comprendra que chaque ressort devra se trouver au milieu de l'intervalle existant entre deux parties saillantes 4 voisines.

Le disque est alors glissé dans l'un des compartiments. Il écarte de lui-même la languette élastique 5 du fait de la forme biseautée de la partie 6 puis, arrivé en position, les ressorts sont comprimés, tandis que le crochet 6 se rabat. Le disque est alors positionné sans jeu possible. Si l'on écarte la partie 6, le disque est éjecté.

On notera que, grâce à l'espace latéral 11, le mouvement de la pièce 5, 6 s'effectue à l'intérieur du coffret 1. On peut donc juxtaposer sans difficulté plusieurs coffrets. L'invention conduit donc à la possiblité de réaliser des élements modulables.

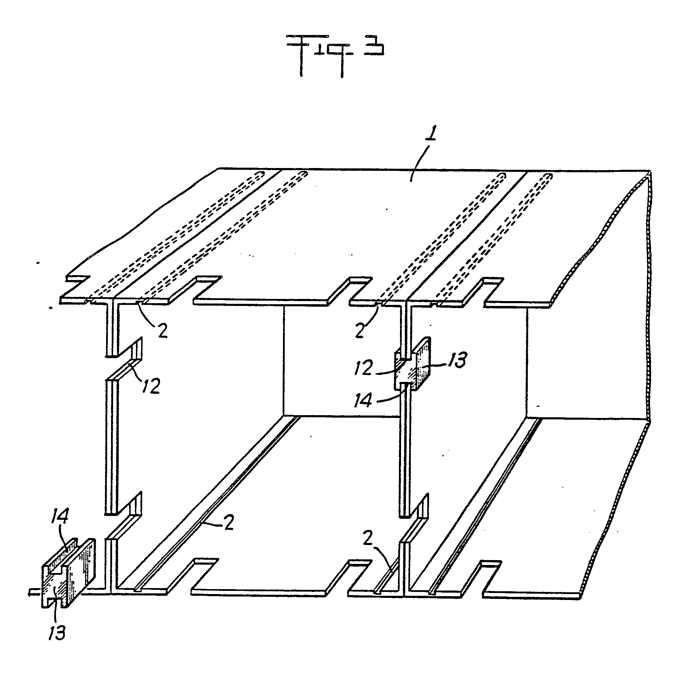

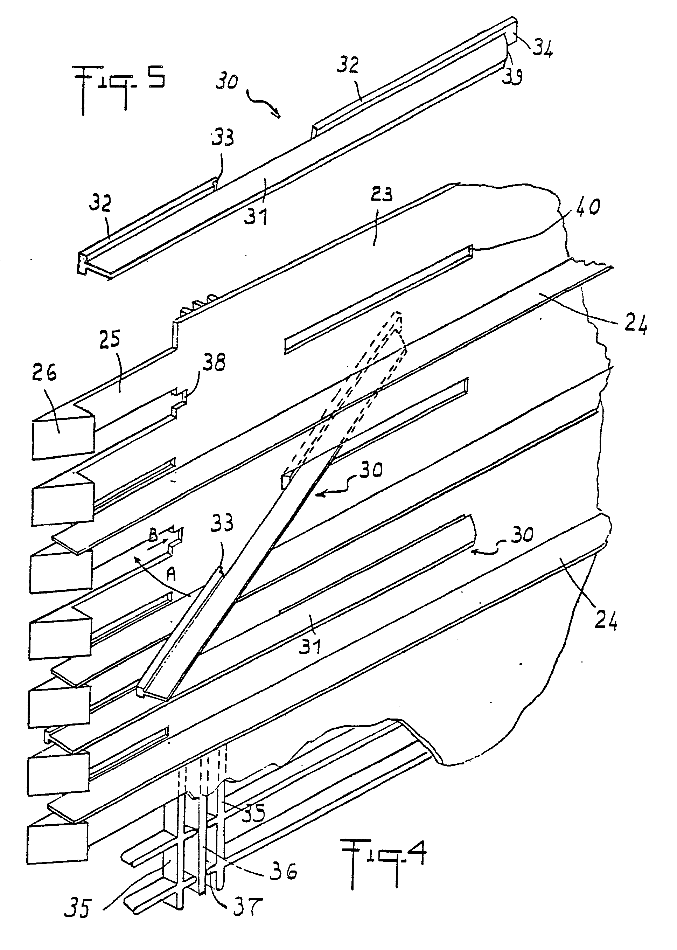

A cet égard, un système d'assemblage de modules est représenté sur la figure 3 annexée.

Les faces (1) de chaque coffret à assembler comportent chacune, du côté de l'ouvrture du coffret, des encoches 12 (de préférence deux, sur le bord de chaque face) dimensionnées de manière à recevoir une clé 13 dont la section droite est en "H". Chaque clé sera elle-même dimensionnée de manière à pouvoir être introduite dans l'encoche double formée par la juxtaposition exacte de deux faces (1) et la largeur des rainures (14) pratiquées dans la clé sera égale à deux fois l'épaisseur de la paroi (1). One peut ainsi assembler de manière particulièrement commode, dans toutes les directions, autant de coffrets qu'on le souhaite. Les clés pourront être réalisées dans un matériau présentant avec le matériau du coffret un coefficient de frottement permettant d'assembler les coffrets commodément et de manière sûre.

Les pièces 3, 7, 8 peuvent être fabriquées sans aucune difficulté par moulage d'une matière plastique.

Le coffret peut être quelconque hormis la présence des quatre rainures 2 ou un système analogue. Ce coffret peut donc pour la première fois être réalisé en bois, adopter un style particulier, etc.

Les éléments sensiblement analogues aux éléments décrits dans la demande de brevet principal portent la même référence augmentée de vingt. Les éléments originaux de la présente demande sont numérotés à partir de 30.

Selon les figures 4 et 5, une plaque plane 23 est dotée de languettes élastiques 25 que terminent des crochets 26 de retenue de cassettes. La plaque 23 comporte des parties saillantes 24 destinées à déterminer des compartiments de rangement des cassettes.

Si, comme c'est le cas de préférence, la plaque 23 est en matière plastique, on prévoit généralement de fabriquer les parties saillantes en même temps que la plaque et d'une même pièce.

Cependant, selon la présente invention, on a conçu un système de parties saillantes amovibles qui permet de tenir compte des différentes épaisseurs de cassettes utilisées.

Ainsi, au moins certaines des parties saillantes fixes 24 sont remplacées par des parties saillantes amovibles 30.

Ces pièces 30 comportent une partie de guidage 31 de rôle et dimensions comparables à ceux des saillies fixes 24, et une partie de fixation 32, éventuellement plus épaisse (d'où une section en T visible sur les figures).

Les pièces 30 se fixent à la plaque 23 d'une part par un premier ergot 33 qui forme une encoche ouverte venant s'insérer (par déplacement longitudinal) sur un bord 38 de la plaque 23, et d'autre part, par un second ergot 34 (plus long que le premier) venant s'appuyer au bord d'une fente 40 pratiquée dans la plaque 23. La mise en place se fait comme indiqué sur la figure 1 par introduction partielle de la pièce 30 dans la fente 40, puis pivotement dans le sens de la flèche A et translation de blocage dans le sens de la flèche B.

La pièce 30 est fabriquée dans un matériau élastorigide permettant une légère déformation pour la désencliqueter: un chanfrein 39 facilite cette manoeuvre.

La partie 32 peut être dimensionée de manière à venir sensiblement en appui sur la paroi non représentée du coffret dans lequel celle des plaques 23, ne portant pas le languette est insérée.

Les pièces amovibles 30 de l'invention et les pièces fixes 24 peuvent être disposées alternativement, ce qui permet le rangement au choix de cassettes de format simple ou de format double par maintien ou enlèvement desdites pièces amovibles.

Selon un autre aspect original de l'invention, on a modifié le coffret de rangement de la façon suivante: au lieu (au fond du coffret) d'avoir deux bases supportant les ressorts d'éjection de cassettes, c'est-à-dire deux ressorts par compartiment simple exerçant une pression symétrique sur chaque cassette, on prévoit d'exercer une pression asymétrique qui pousse la cassette en l'orientant vers les crochets 26, supposés n'équiper qu'une seule des deux plaques latérales du coffret. A cet effet, on ne dispose par exemple qu'une seule rangée de ressorts dans le fond du coffret, cette rangée étant déportée, par rapport à une ligne médiane du fond parallèle aux plaques, du côté opposé à la plaque 23 portant les crochets 26. La rangée de ressorts est avantageusement disposée aux 2/3 de la largeur du fond.

De la sorte les cassettes sont plus sûrement repoussées contre les crochets et l'accrochage de celles-ci est assuré même en dépit des tolérances relativement larges de fabrication des cassettes (pouvant atteindre quelque 7/10° de mm): on a constaté en effet l'arrivée massive sur le marchée de cassettes de provenances variées et dont la qualité et le respect de la standardisation laissent parfois à désirer.

Cette pression asymétrique des cassettes pourrait, selon la nature du matériau constitutif de la plaque 23 et du coffret, entraîner un flambage de la plaque 23, voire des parois latérales du coffret.

C'est pourquoi on a prévu, selon l'invention, des éléments de renforcement structurel de la plaque 23 dans le sens perpendiculaire aux saillies 24 et 30. Ces éléments comprennent par exemple des nervures 35 venues de matière avec la plaque 23, et avantageusement une barrette d'acier 36 coincée entre des saillies-nervures 37 venues de matière.

## Revendication

Dispositif de rangement et maintien en place, avec éjection mécanique, de disques compacts, cassettes d'enregistrement magnétique et analogues, consistant en un coffret (1) ouvert sur l'une de ses faces, deux plaques latérales (3, 23) portant sur leur face intérieure des parties saillantes (4) supportant lesdits disques ou cassettes et déterminant entre elles des compartiments de rangement, au moins l'une (23) de plaques faisant apparaître une languette élastique (25) terminée par un crochet de retenue (26) manoeuvrable grâce à un espace ménagé entre la plaque (23) et le coffret, ainsi qu'un ensemble de ressorts destinés à l'éjection des cassettes, caractérisé en ce que les deux plaques latérales sont glissées dans des rainures du coffret et en ce qu'au moins l'une des parties saillantes de chaque plaque latérale est constituée d'une pièce amovible (30) qui se fixe sur ladite plaque (23) par encliquetage d'ergots (33, 34) portés par ladite pièce amovible dans deux fentes (38, 40) convenablement disposées dans ladite plaque (23).

**Patentanspruch**

Vorrichtung zum Einordnen und Aufbewahren von CDs, Magnetspeicherkassetten und dgl., mit mechanischem Auswurf, bestehend aus einem an einer Seite offenen Gehäuse (1), zwei Seitenplatten (3, 23) mit an ihren Innenseiten vorspringenden Teilen (4) zur Halterung der CDs oder Kassetten, welche dazwischen Abteile zum Einordnen begrenzen, wobei mindestens eine (23) der Platten eine elastische Zunge (25) aufweist, die in einem Halterungshaken (26) endet, welcher aufgrund eines zwischen der Platte (23) und dem Gehäuse vorgesehenen Raums manövrierfähig ist, sowie aus einer Gruppe von Federn zum Auswerfen der Kassetten, dadurch gekennzeichnet, daß die beiden Seitenplatten in Rillen des Gehäuses gleiten und daß zumindest einer der vorspringenden Teile jeder Seitenplatte durch ein abnehmbares Stück (30) gebildet ist, das durch Einklinken von auf dem abnehmbaren Stück vorgesehenen Vorsprüngen (33, 34) in zwei entsprechend in der Platte (23) angeordneten Schlitzen (38, 40) auf der Platte (23) fixierbar ist.

**Claim**

Device for storing and holding in position, with mechanical ejection, compact discs, magnetic recording cassettes and the like, consisting in a case (1) open on one of its faces, two sides plates (3, 23) carrying on their inner surface projecting portions (4) supporting said discs or cassettes and defining storing compartments between them, at least one (23) of the plates forming an elastic tongue (25) ending into a retaining hook (26) which is manoeuvrable thanks to a space provided between the plate (23) and the case, as well as a set of springs for ejecting the cassettes, characterized in that the two side plates are inserted into grooves of the case and in that at least one of the projecting portions of each side plate is constituted of a removable piece (30) which is fixable on said plate (23) by force-fitting lugs (33, 34) carried by said removable piece into two slots (38, 40) suitably provided in said plate (23).

Fig.1

Fig.2

(a)

(b)

Fig. 3

Fig. 5

Fig. 4